# EUROPÄISCHE PATENTSCHRIFT

(11) **EP 0 707 811 B1**
(45) Veröffentlichungstag und Bekanntmachung des Hinweises auf die Patenterteilung: **19.07.2006**
(21) Anmeldenummer: 95116550.5
(22) Anmeldetag: 20.10.1995
(51) Int. Cl.: A47B 21/00

(54) **Kabelkanal**
Cable duct
Canalisation pour câbles électriques

(30) Priorität: 20.10.1994 DE 9418403 U
(43) Veröffentlichungstag der Anmeldung: 24.04.1996
(73) Patentinhaber: SCHÜCO International KG, 33609 Bielefeld (DE)
(72) Erfinder: Diekmann, Bernd, Dipl.-Ing., D-33790 Halle/Westf. (DE); Stosch, Martin, Dipl.-Ing. Arch., D-32756 Detmond (DE)
(74) Vertreter: Stracke, Alexander

(56) Entgegenhaltungen:
- EP-A- 0 462 920
- EP-A- 0 509 413
- DE-A- 4 014 082
- DE-U- 8 421 798
- GB-A- 2 233 163

## Beschreibung

Die vorliegende Erfindung betrifft einen Kabelkanal zur Aufnahme von Kabeln, der mittels Halteteilen an Profilschienen eines Bauelementes festgelegt und aus Einzelsegmenten gebildet ist, die drehbeweglich miteinander gekoppelt sind.

Bei einem aus der EP 0 462 920 A1 vorbekannten Kabelkanal wird dieser aus graden, sowie einstückigen Abschnitten gebildet, deren Längen den Einzelbauteilen eines Möbels angepaßt sind. Diese Kanalabschnitte sind über ein flexibles Rohrstück, beispielsweise in Form eines Faltenbalges miteinander verbunden. Die einzelnen Abschnitte sind demzufolge typabhängig. Der Kabelkanal wird aus einem sich über einen bestimmten Winkelbereich erstreckenden Innenrohr und einem mit dem Innenrohr verbundenen Mantelrohr gebildet. An der oberen Seite ist das Innenrohr mit einer in Längsrichtung verlaufenden Nut ausgestattet, in die ein am Möbelbauteil festgelegtes Profil eingreift. In dieses Profil sind mehrere mit einem Kopf versehene Schrauben eingedreht. Die die Nut begrenzenden parallelen Schenkel sind mit nach innen und aufeinander zugerichteten Stegen versehen, die zwischen den Köpfen der Schrauben und dem zugewandten Schenkel des Profils stehen. Die Abschnitte des Kabelkanals können demzufolge ausschließlich in Längsrichtung der Profile auf diese aufgeschoben werden. Das Innenrohr ist außerdem mit einem Schlitz versehen, um die Kabel aus dem Kabelkanal heraus zu führen. Damit die Ummantelung des Kabels nicht beschädigt wird, ist ein den Schlitz begrenzender Rand mit einer Zunge versehen. Zur Stabilisierung des Innenrohres im Bereich des Schlitzes sind in diesem Bereich Streben verrastet.

Diese Konstruktion ist äußerst aufwendig, bedingt durch das Innenrohr und den Außenmantel. Außerdem ist diese Ausführung typabhängig, so daß die Abschnitte an die Bauform eines Möbels angepaßt werden müssen. Außerdem sind zur Verbindung des Kabelkanals mit einem Profil Verbindungselemente in Form von Schrauben notwendig. Da der Kabelkanal nur in seiner Längsrichtung auf die Profile aufgeschoben werden kann, ist insbesondere eine nachträgliche Anbringung unmöglich, oder nur schwierig, wenn die Umgebung des Möbels nicht frei ist. Da die einzelnen abschnitte ausschließlich geradlinig gestaltet sind, außerdem eine Anpassung an z.B. bogen- oder kurvenförmige Konturen nicht möglich.

Aus der DE 40 14 082 ist ein Kabelkanal für Winkelelemente ähnlicher Bauart bekannt. Auch hier wird er aus einzelnen geraden Abschnitten gebildet, die an die Größe der einzelnen Winkelelemente anzupassen sind. Der Kabelkanal besteht aus zwei seitlichen, parallel und im Abstand zueinander verlaufenden Randprofilen, und einem die Randprofile verbindenden Kabelkanalboden. Lediglich die Randprofile werden über spezielle, in die Profile eingeschobene Verbinder miteinander verbunden. Die Verbinder besitzen einen Scharnierbolzen. Der Kabelkanalboden muß jedoch entsprechend der vorgegebenen Form in einem sich daraus ergebenden Winkel zugeschnitten und angepaßt werden. Auch dieser vorbekannte Kabelkanal läßt keine Anpassung an unterschiedliche Konturen zu.

Ausgehend von dem zuvor beschriebenen Stand der Technik liegt der Erfindung die Aufgabe zugrunde, einen Kabelkanal so auszubilden, daß er in einfachster Weise an die unterschiedlichen Bauelemente angepasst werden kann, und der in einfachster Weise auf die jeweils benötigte Länge gebracht werden kann und sich an vorhandene Bögen und Rundungen selbsttätig anpaßt.

Die gestellte Aufgabe wird gelöst, in dem der Kabelkanal aus einer Vielzahl von an einander gereihten Einzelsegmenten gebildet ist, die drehbeweglich miteinander gekoppelt sind, und daß an einer Seite des Kabelkanals eine in eine hinterschnittene Nut eines Profils einhängbare Verhackungsrandleiste angesetzt ist.

Der Kabelkanal besteht nunmehr aus einer Vielzahl von miteinander gekoppelten Einzelsegmenten, so daß jede gewünschte Länge durch eine entsprechende Anzahl dieser Einzelsegmenten hergestellt werden kann. Da sie drehbeweglich miteinander gekoppelt sind, lassen sich positive und negative bzw. konvexe oder konkave Bögen in einfachster Weise herstellen. Durch die Verhakungsrandleiste wird der Kabelkanal in einfachster Weise an das jeweilige Profil angehängt. Dadurch ist die Montage äußerst einfach. Außerdem kann bei Bedarf der Kabelkanal auch wieder in einfachster Weise demontiert werden. Die Einzelsegmente werden scharnierartig miteinander gekoppelt. Diese Koppelung ist in einfachster Weise möglich, wenn zur drehbeweglichen Verbindung der Einzelsegmente der Boden an einem Stirnendbereich mit einem Rastscharnierzapfen und am gegenüberliegenden Stirnendbereich mit einer entsprechenden Aufnahme versehen ist. Der Vorteil liegt darin, daß keinerlei Verbindungselemente notwendig sind, sondern daß durch die Formgebung diese scharnierartige Verbindung möglich ist.

Zweckmäßigerweise sind die Abstände des Rastschamierzapfens zur mittleren Querachse und der Aufnahme zur Querachse gleich. Die mittlere Querachse ist diejenige Achse, die mittig durch die äußeren Schenkel verläuft.

Das Einhängen wird besonders einfach, wenn die Verhakungsrandleiste winkelförmig ausgebildet ist. Das Einhängen der Einzelsegmente erfolgt dann, indem sie zunächst in eine Winkelstellung gebracht werden. Der äußere freie Steg der Verhakungsrandleiste hintergreift in der eingehängten Stellung einen die Nut des Profils begrenzenden Steg. Dadurch ist bereits ein ungewolltes selbsttätiges Aushängen verhindert. Zur Erhöhung der Sicherheit ist jedoch vorgesehen, daß im Abstand zur Verhakungsrandleiste ein Sichrungssteg steht, der das die hinterschnittene Nut aufweisende Profil untergreift. Damit der Boden des Kabelkanals im wesentlichen glattflächig und ohne Lücken ist, ist vorgesehen, daß jedes Einzelsegment in seiner Grundkontur U-förmig ausgebildet ist, und daß der die beiden parallelen Schenkel verbindende Boden in Längsrichtung stufenförmig abgesetzt ist, und daß die obere Fläche des nach unten versetzten Bereiches mit der unteren Fläche des nach oben versetzten Bereiches fluchtet. Durch diese stufenförmige Ausbildung überlappen sich die Endbereiche der einzelnen Segmente. Dabei ist es dann besonders vorteilhaft, wenn vorzugsweise die Stirnseite des unteren Bereichs des Bodens in einem Bogen verläuft, und daß der Bereich des Versatzes des Bodens in einem die Drehbeweglichkeit ermöglichenden Bogen verläuft. Die mittlere Querachse ist zweckmäßigerweise gleichzeitig der Mittelpunkt des stirnseitigen Kreisbogens. In weiterer Ausgestaltung ist vorgesehen, daß jedes Einzelsegment eine mittlere, vom Boden aufragende Wange aufweist, die in ungleichen Abständen zu den beiden äußeren parallel zueinander stehenden Schenkeln angeordnet ist. Dadurch besteht der Kabelkanal aus zwei Einzelkanälen, die von einander durch die Wange getrennt sind. Der eine Einzelkanal kann beispielsweise für Steuerleitungen und der andere Einzelkanal zur Stromversorgung benutzt werden. Dadurch lassen sich die mit Netzspannung beaufschlagten Leiter von denen mit einer Niederspannung beaufschlagten trennen. Dabei ist zweckmäßigerweise dann vorgesehen, daß der Abstand der aufragenden Wange zu dem die Verhakungsrandleiste tragenden Schenkeln geringer ist als zu den gegenüberliegenden äußeren Schenkeln. Dadurch wird der Tatsache Rechnung getragen, daß die mit der Netzspannung beaufschlagten Leiter den größeren Querschnitt haben. In den größeren Einzelkanal werden diese dann verlegt. Damit insbesondere die mit der Netzspannung beaufschagten Leiter auch festgelegt werden können ist vorgesehen, daß an der zugewandten Seite der aufragenden Wange mehrere Raststege angeformt sind.

Anhand der beiliegenden Zeichnungen wird die Erfindung noch näher erläutert.

Es zeigen:
- Figur 1: Ein an einer Profilschiene eines Bauelementes eingehängtes Einzelsegment in einer Stirnansicht,
- Figur 2: das Einzelsegment in einer Draufsicht und
- Figur 3: eine Schnittdarstellung gemäß der Linie III-III in der Figur 2.

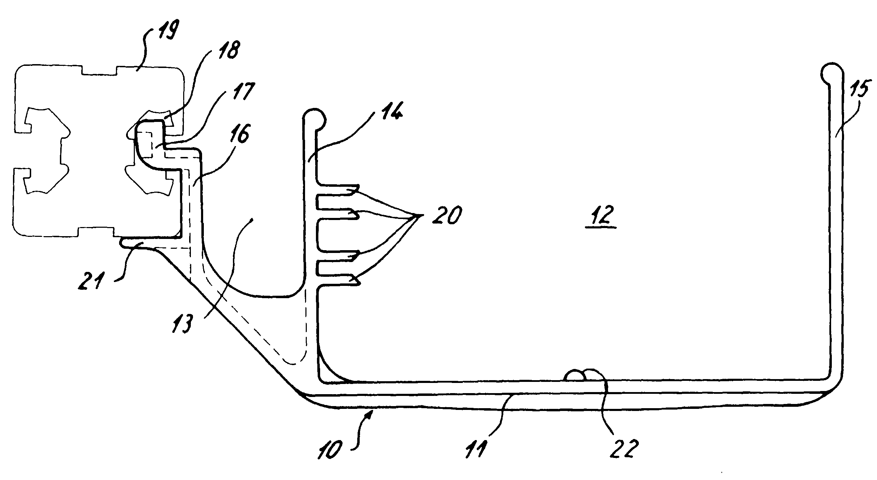

Das in den Figuren 1 bis 3 dargestellte Einzelsegment 10 hat einen stufenförmig ausgebildeten Boden 11, wobei die obere Seite des tieferliegenden Bereiches mit der unteren Seite des höherliegenden Bereiches fluchtet. Zur Bildung von zwei Einzelkanälen 12, 13 ragt eine Wange 14 nach oben, die in ungleichen Abständen zu den beiden äußeren Schenkeln 15, 16 steht. An dem äußeren Schenkel 16 ist eine winkelförmige Verhakungsrandleiste 17 angeformt. Der Abstand zwischen diesem äußeren Schenkel und der Wange 14 ist deutlich kleiner als der Abstand der Wange 14 zu dem äußeren Schenkel 15. Mittels der Verhakungsrandleiste 17 ist das Einzelsegment in eine hinterschnittene Nut 18 einer Profilschiene 19 eingehängt die Teil eines Bauelementes ist, welches beliebig ausgebildet sein kann. Der Einzelkanal 12 mit dem größeren Querschnitt kann zur Verlegung von mit einer Netzspannung beaufschlagten Leitungen verwendet werden, während der Einzelkanal 13 mit dem kleineren Querschnitt für Niederspannungsleitungen, beispielsweise zur Datenübertragung benutzt werden kann. An die Wange 14 sind im dargestellten Ausführungsbeispiel vier Raststege 20 angeformt, die in den Einzelkanal 12 mit dem größeren Querschnitt hineinragen. Der sich an den Boden 11 anschließende, zwischen der Wange 14 und den die Verhakungsrandleiste 18 tragenden Schenkel 16 liegende Bereich ist schräg ausgebildet. An diesen Bereich ist ein im Abstand zur Verhakungsrandleiste 18 liegender Sicherungssteg 21 angesetzt, der die Profilschiene 19 untergreift.

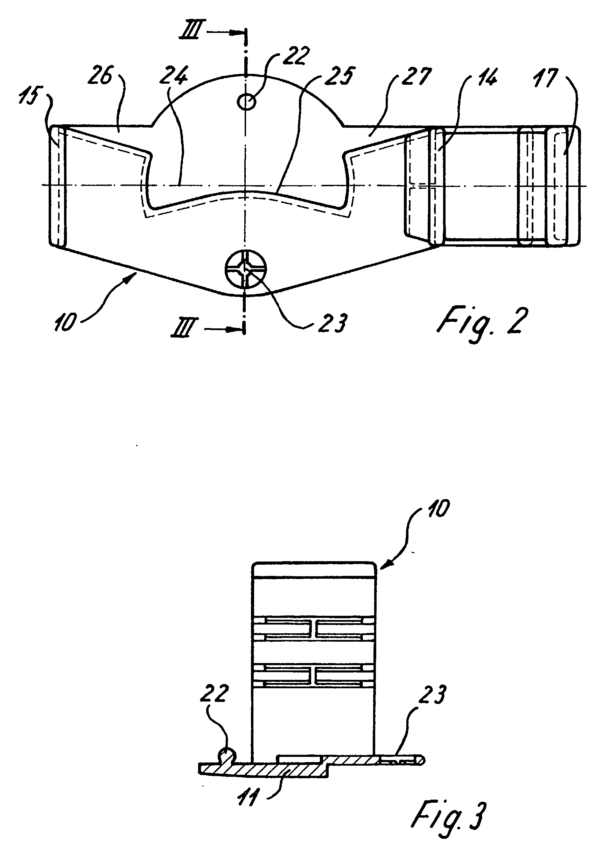

Die Figuren 2 und 3 zeigen, daß der Boden 11 stufenförmig ausgebildet ist, und daß der Bereich des Stufensprunges bogenförmig verläuft. An dem tieferliegenden Bereich des Bodens 11 ist im Stirnendbereich ein nach oben ragender Rastscharnierzapfen 22 angeformt. An dem gegenüberliegenden Stirnendbereich ist eine entsprechende Aufnahme 23 vorgesehen, in den der Rastscharnierzapfen 22 des nicht dargestellten, angrenzenden Einzelsegmentes eingreift. Dadurch wird eine scharnierartige Verbindung zwischen den Einzelsegmenten 10 möglich. Durch die strichpunktierte Linie 24 ist die mittlere Querachse dargestellt. Der Abstand des Rastscharnierzapfens 22 zur mittleren Querachse 24 ist genauso groß wie der Abstand der Aufnahme 23 zu dieser Achse. Dadurch wird die Drehbeweglichkeit der Einzelsegmente 10 gewährleistet. Der Rastscharnierzapfen 22 und die Aufnahme 23 liegen in der Mittellängsachse des von dem äußeren Schenkel 15 und der Wange 14 begrenzten Einzelkanals 12 mit dem größeren Querschnitt. Das den Rastscharnierzapfen 22 tragende, nach unten versetzte Teilstück des Bodens 11 ist im Stirnendbereich kreisbogenförmig ausgebildet, wobei der Mittelpunkt im Schnittpunkt der mittleren Querachse zur Mittellängsachse liegt. Der mittlere Bereich des Bodens 11 ist ebenfalls bogenförmig ausgebildet, wie durch die Linie 25 dargestellt ist. Es entstehen außerdem Bodenverlängerungen 26, 27, von denen der äußere Schenkel 15 und die Wange 14 ausgehen. Der im mittleren Bereich liegende Bogen des Bodens 11 ist so gestaltet, daß die Drehbeweglichkeit ermöglicht wird. Es ergibt sich insbesondere aus der Figur 3, daß durch eine Vielzahl von aneinander gereihten Einzelsegmenten 10 ein durchgängiger, im wesentlichen glattflächiger Boden für die beiden Einzelkanäle 12 und 13 entsteht. Die Anzahl der benötigten Einzelsegmente ergibt sich aus der Länge des jeweiligen Kabelkanals. Es ergibt sich auch, daß positive und negative bzw. konvexe und konkave Bögen gebildet werden können. Die Einzelsegmente können aus einem Kunststoff oder aus Leichtmetall hergestellt werden.

## Patentansprüche

1. Kabelkanal zur Aufnahme von Kabeln, der mittels Halteteilen an Profilschienen eines Bauelementes festgelegt ist, **dadurch gekennzeichnet, daß** der Kabelkanal aus einer Vielzahl von aneinander gereihten Einzelsegmenten (10) gebildet ist, die drehbeweglich miteinander gekoppelt sind, und daß an einer Seite des Kabelkanals eine in eine Hinterschnittene Nut (18) eines Profils (19) einhängbare Verhakungsrandleiste (17) angesetzt ist.

2. Kabelkanal nach Anspruch 1, **dadurch gekennzeichnet, daß** die Verhakungsrandleiste (17) winkelförmig ausgebildet ist.

3. Kabelkanal nach .Anspruch 1, **dadurch gekennzeichnet, daß** im Abstand zur Verhakungsrandleiste (17) ein Sicherungssteg (21) angesetzt ist, der das die hinterschnittene Nut (18) aufweisende Profil (19) untergreift.

4. Kabelkanal nach Anspruch 1, **dadurch gekennzeichnet, daß** jedes Einzelsegment (10) in seiner Grundkontur u-förmig ausgebildet ist, daß der die beiden parallelen Schenkel (15, 16) verbindende Boden (11) in Längsrichtung stufenförmig abgesetzt ist, und daß die obere Fläche des nach unten versetzten Bereiches mit der unteren Fläche des nach oben versetzten Bereiches fluchtet.

5. Kabelkanal nach Anspruch 4, **dadurch gekennzeichnet, daß** vorzugsweise die Stirnseite des nach unten versetzten Bereiches des Bodens (11) in einem Bogen verläuft, und daß der Bereich des Versatzes des Bodens (11) in einem die Drehbeweglichkeit ermöglichenden Bogen verläuft.

6. Kabelkanal nach Anspruch 4 oder 5, **dadurch gekennzeichnet, daß** zur drehbeweglichen Verbindung der Einzelsegmente (10) der Boden (11) an einem Stirnendbereich mit einem Rastscharnierzapfen (22) und am gegenüberliegenden Stirnendbereich mit einer entsprechenden Aufnahme (23) versehen ist, wobei die Abstände von der mittleren Querachse (24) gleich sind.

7. Kabelkanal nach einem oder mehreren der vorhergehenden Ansprüche, **dadurch gekennzeichnet, daß** jedes Einzelsegment (10) eine mittlere, vom Boden (11) aufragende Wange (14) aufweist, die in ungleichen Abständen zu den beiden äußeren, parallel zueinander stehenden Schenkeln (15, 16) angeordnet ist.

8. Kabelkanal nach Anspruch 7, **dadurch gekennzeichnet, daß** der Abstand der aufragenden Wange (14) zu dem die Verhakungsrandleiste (17) tragenden Schenkel (16) geringer ist als zu dem gegenüberliegenden äußeren Schenkel (15).

9. Kabelkanal nach einem oder mehreren der vorhergehenden Ansprüche, **dadurch gekennzeichnet, daß** an der aufragenden Wange (14) vorzugsweise an der der Verhakungsrandleiste (17) abgewandten Seite mehrere Raststege (20) angeformt sind.

## Claims

1. Cable duct for holding cables, which is fixed by means of holding parts on profiled rails of a component, **characterized in that** the cable duct is formed from a large number of individual segments (10) which are arranged in a row and are coupled to one another such that they can rotate, and **in that** a hooking edge strip (17), which can be hooked into an undercut groove (18) in a profile (19), is fitted to one side of the cable duct.

2. Cable duct according to Claim 1, **characterized in that** the hooking edge strip (17) is angled.

3. Cable duct according to Claim 1, **characterized in that** a securing web (21) is fitted at a distance from the hooking edge strip (17) and engages under the profile (19) of the undercut groove (18).

4. Cable duct according to Claim 1, **characterized in that** each individual segment (10) has a U-shaped basic contour, **in that** the base (11), which connects the two parallel limbs (15, 16), is offset in the form of a step in the longitudinal direction, and **in that** the upper surface of the area which is offset downwards is aligned with the lower surface of the area which is offset upwards.

5. Cable duct according to Claim 4, **characterized in that** the end face of that area of the base (11) which is offset downwards preferably runs in a curve, and **in that** the area of the offset of the base (11) runs in a curve which allows rotational movement.

6. Cable duct according to Claim 4 or 5, **characterized in that**, in order to connect the individual segments (10) such that they can rotate, the base (11) is provided on one end face area with a latching hinge pin (22) and is provided on the opposite end face area with a corresponding holder (23), with the distances from the central transverse axis (24) being the same.

7. Cable duct according to one or more of the preceding claims, **characterized in that** each individual segment (10) has a central side piece (14), which projects from the base (11) and is arranged at nonuniform distances from the two outer, mutually parallel, limbs (15, 16).

8. Cable duct according to Claim 7, **characterized in that** the distance between the projecting side piece (14) and the limb (16) to which the hooking edge strip (17) is fitted is less than that to the opposite outer limb (15).

9. Cable duct according to one or more of the preceding claims, **characterized in that** two or more latching webs (20) are formed on the projecting side piece (14); preferably on the side facing away from the hooking edge strip (17).

## Revendications

1. Canalisation de câble destinée à recevoir des câbles, qui est fixée au moyen d'éléments de retenue sur des rails profilés d'un composant, **caractérisée en ce que** la canalisation de câble est constituée d'un grand nombre de segments individuels (10) juxtaposés qui sont couplés entre eux mobiles en rotation, et **en ce que** sur un côté de la canalisation de câble est placée une baguette de bordure d'accrochage (17) pouvant être accrochée dans une rainure (18) détalonnée d'un profilé (19).

2. Canalisation de câble selon la revendication 1, **caractérisée en ce que** la baguette de bordure d'accrochage (17) est en forme de cornière.

3. Canalisation de câble selon la revendication 1, **caractérisée en ce qu'**à distance de la baguette de bordure d'accrochage (17) est placée une languette de blocage (21) qui passe sous le profilé (19) présentant la rainure (18) détalonnée.

4. Canalisation de câble selon la revendication 1, **caractérisée en ce que** le contour de base de chaque segment individuel (10) présente une forme en U, **en ce que** le fond (11) reliant les deux branches parallèles (15, 16) est étagé dans la direction longitudinale, et **en ce que** la surface supérieure de la zone décalée vers le bas est alignée avec la surface inférieure de la zone décalée vers le haut.

5. Canalisation de câble selon la revendication 4, **caractérisée en ce que** le côté frontal de la zone du fond (11), décalée vers le bas, s'étend de préférence en arc, et **en ce que** la zone du déport du fond (11) s'étend en un arc permettant la mobilité en rotation.

6. Canalisation de câble selon la revendication 4 ou 5, **caractérisée en ce que** pour la liaison mobile à rotation des segments individuels (10), le fond (11) est pourvu dans une zone d'extrémité frontale d'une cheville de charnière à accrochage (22) et, dans la zone d'extrémité frontale opposée, d'un logement (23) correspondant, les distances par rapport à l'axe transversal médian (24) étant égales.

7. Canalisation de câble selon une ou plusieurs des revendications précédentes, **caractérisée en ce que** chaque segment individuel (10) présente une joue (14) centrale, se dressant sur le fond (11), qui est disposée à distance inégale des deux branches (15, 16) extérieures, parallèles l'une à l'autre.

8. Canalisation de câble selon la revendication 7, **caractérisée en ce que** la distance de la joue (14) verticale par rapport à la branche (16) portant la ' baguette de bordure d'accrochage (17), est moins grande que par rapport à la branche extérieure (15) opposée.

9. Canalisation de câble selon une ou plusieurs des revendications précédentes, **caractérisée en ce que** plusieurs nervures d'accrochage (20) sont formées de préférence sur le côté tourné à l'opposé de la baguette de bordure d'accrochage (17).
